# EUROPEAN PATENT SPECIFICATION

(11) **EP 0 272 459 B1**
(45) Date of publication and mention of the grant of the patent: **09.06.1993**
(21) Application number: 87117145.0
(22) Date of filing: 20.11.1987
(51) Int. Cl.: C08J 3/22, C08L 21/00

(54) **Masterbatch with fiber and liquid elastomer**
Vormischung mit Fasern und einem flüssigen Elastomer
Mélange maitre contenant des fibres et un élastomère liquide

(30) Priority: 20.11.1986 US 932947
(43) Date of publication of application: 29.06.1988
(73) Proprietor: E.I. DU PONT DE NEMOURS AND COMPANY, Wilmington Delaware 19898 (US)
(72) Inventor: Frances, Arnold, Wilmington, DE 19803 (US)
(74) Representative: Abitz, Walter, Dr.-Ing.

(56) References cited:
- GB-A- 2 147 589
- US-A- 4 098 715
- US-A- 4 514 541
- US-A- 4 564 670
- PATENT ABSTRACTS OF JAPAN, vol. 5, no. 178 (C-78)[850], 14th November 1981
- DATABASE WPIL, no. 81-18621D, Derwent Publications Ltd, London, GB

## Description

### Field of the Invention

This invention relates to a particulate elastomeric composition suitable for use as a masterbatch material to facilitate the blending of aramid pulp into elastomers. The invention also relates to a process for preparing the particulate elastomeric composition.

Reinforcement of elastomers with fibers or fibrous materials is well known. Such fibers or fibrous materials increase the modulus of the elastomer containing them and thus increase the resistance of the elastomer to stretch. Uniform blending of fibers and fibrous materials into elastomers can be difficult, especially when relatively large quantities, i.e. >5%, of the fiber or fibrous material are to be blended into the elastomer. This problem is particularly troublesome in the case of high strength, high modulus aramid fibers and pulp because the fibers and pulp are so strong that they are not broken in the mixing operation but rather tend to "ball-up" with consequent nonuniform dispersion throughout the elastomer.

British Patent 2,147,589 published May 15, 1985 discloses a method for dispersing aramid fibers into rubbery polymer solutions to make fiber-reinforced compositions.

United States Patent 4,514,541 issued April 30, 1985 on the application of the same inventor as herein, discloses an elastomeric composition for masterbatch use wherein the elastomeric material of the composition is utilized as a solution with a solvent which must be evaporated and recovered.

United States Patent 3,697,364 issued October 10, 1972 and United States Patent 3,836,412 issued September 17, 1974 on the applications of K. Boustany et al. disclose elastomeric compositions reinforced by cellulosic fibers wherein the fibers are treated before dispersion in the elastomer by being mixed with fillers or solvents or latices to be coagulated to solid elastomers. The compositions also comprise bonding agents for strong fiber-to-elastomer adhesion.

German Patent Application OLS 3,221,266 published December 8, 1983 on behalf of G. Bauer discloses sealing compositions which comprise elastomers and aramid fibers wherein the fibers are treated, before dispersion in the elastomer, by a coating of an opposite electrical charge, namely, for example, silicic acid. There is no masterbatch element to the dispersing process.

United States Patent 4,263,184 issued April 21, 1981 on the application of T. Leo et al. discloses a fibrous masterbatch composition for dispersion into elastomers wherein the masterbatch comprises fibers and a coagulated latex of elastomer or polymer.

United States Patent 3,998,778 issued December 21, 1976 on the application of G. Berg et al. discloses a filler masterbatch composition which is fiber-free and made by combining an emulsion of filler-containing elastomer solution with an aqueous alkali silicate solution to coagulate the elastomers.

Japanese Patent Laid-Open Publication 100,836/81 published August 13, 1981 discloses preparation of masterbatch blending compositions comprising NBR, carbon black, and aramid fiber. The NBR is solid and carboxylated. The carboxylation is used to increase adhesion to the aramid fiber.

United States Patent 3,931,094 issued January 6, 1976 on the application of L. Segel et al. discloses a composition of thermoplastic resin, filler, and fibrous dispersing aid wherein all of the filler and the fibrous dispersing aid are combined with all of the thermoplastic resin to yield a final filled product. There is no materbatch element to the compounding process.

United States Patent 4,564,670 is concerned with the solution of a quite special problem. It teaches the use of a particular liquid rubber to incorporate a single, particular, particulate material into a rubber composition for later curing; and that single material is used as a vulcanizing agent for the curing. It is said that only cis-polyisoprene liquid will work with the particulate sulfur.

It is known to coat fibrous materials with elastomeric latices followed by coagulation of the latices to provide a mixture of fibrous material and elastomer useful in assisting the dispersion of the fibrous material into the same or another elastomer. Such elastomer-coated fibrous materials are generally in the form of a solid mass of fibers and elastomer which must be cut for further processing. This procedure has not been described using aramid pulp. Disadvantages of the procedure are that only elastomers available in latex form can be used and that use of such latices requires the removal of water from the final dispersion.

### Brief Description Of The Invention

This invention provides a particulate elastomeric composition which is suitable for use as a masterbatch material in compounding elastomeric products. The masterbatch material of the invention consists of aramid pulp, reinforcing filler, and a liquid elastomer. The liquid elastomer is used without organic solvents and the masterbatch material, nevertheless, does not evidence the liquid nature of the elastomer.

The masterbatch material of this invention comprises 5 to 65 weight parts of aramid pulp, 10 to 65 weight parts of reinforcing filler, and 5 to 75 weight parts of the liquid elastomer, the liquid elastomer having a viscosity of 1 to 10⁶mPa.s at a shear rate of 2-3 sec⁻¹ at 50°C. The masterbatch material is made by thoroughly mixing the aramid pulp and the reinforcing filler and then combining the pulp and filler with the liquid elastomer. The aramid pulp is preferably poly(p-phenylene terephthalamide) having lengths from 0.1 to 8 mm with an average length of about 1 to 3 mm and perhaps slightly larger; and the reinforcing filler is preferably carbon black or silica. The fiber length-to-diameter ratio is at least 10 and may be as much as 1000 or more. The liquid elastomer is preferably polybutadiene or co-polymers of butadiene and acrylonitrile with a viscosity of 20,000-70,000 mPa.s (centipoises) at a shear rate (sec⁻¹) of about 2 to 3 and at 25°C.

The particulate elastomeric composition of this invention is made using liquid elastomer with no solvents as an aid to preparation of the composition. Because the elastomer is liquid, there is no need to use solvents and, therefore, there is no need to remove solvent from the composition, once prepared. The liquid nature of the elastomer permits complete wetting by the elastomer of pulp particles in the composition and the small amounts of the liquid elastomer in the composition cause the composition to have a dry appearance. This invention provides for a dry, particulate, elastomer composition useful as a masterbatch material for compounding elastomers but without the disadvantages of using, evaporating, and recovering solvents from the composition.

### Detailed Description Of The Invention

By aramid pulp is meant a synthetic pulp made by mechanical shattering of fibers derived from high strength, high modulus aromatic polyamide fibers such as those described in United States Patents 3,869,429 and 3,869,430. Particularly preferred is aramid pulp derived from poly(p-phenylene terephthalamide) fibers. Aramid pulp is preferably made using pulp refining methods which are used in the paper industry, for example, disc refining. The aramid fibers are shattered both transversely and longitudinally to provide fibers having a length of 0.1 to 8 mm, depending on the degree of refinement. Attached to these fibers are fine fibrils which have a diameter as small as 0.1 µm as compared to a diameter of about 12 µm for the main (trunk) part of the fiber. The aramid pulp has the appearance of hairy fibers. Aramid pulp has a Canadian Standard Freeness of 300-650 cm³ and a Clark Classification (% on 14 mesh screen) of 5-45%. Preferred for use in the present invention is aramid pulp having a length in the range of 0.5-4 mm and an average length of about 2 mm, a Canadian Standard Freeness of 300-450 cm³ and a Clark Classification of 5-15%. Less preferred, but still useful is longer pulp having a length of 0.1 to 8 mm and an average length of from about 1 to 5 mm having a Canadian Standard Freeness of 525-650 cm³ and a Clark Classification of 20-45%.

High strength, high modulus aromatic polyamide fibers are derived from aromatic polyamides whose chain extending bonds are either coaxial or parallel and oppositely directed. Such fibers are described in United States Patents 3,869,429 and 3,869,430 and may be prepared by the spinning process described in United States Patent 3,767,756.

The fillers useful in the present invention are the usual reinforcing fillers useful for compounding into elastomers, for example, carbon blacks and structured silica.

Liquid elastomers useful in practice of this invention include elastomers of low enough molecular weight and few enough crosslinks that the elastomer material, itself, without solvents, diluents, or other additives exhibits a viscosity of 1 to 10⁶ mPa.s (centipoises) as determined at shear rates of 2 to 3 sec⁻¹ and at the temperature of mixing. Liquid elastomers have not been used in masterbatch compositions prior to the present invention. One essential criterion for use of a liquid elastomer is that the elastomer must have a viscosity which is appropriate for mixing with the filler, fiber, and other components at the temperature at which the mixing is conducted. Mixing of the components is generally conducted at about 20-50°C and less than 100°C. It has been concluded that the liquid elastomer can be combined with the other components so long as the viscosity of the elastomer is less than about 10⁶ mPa.s (centipoises). The lower limit is a practical limitation of little critical importance because the components can be easily combined when the elastomer has a low viscosity.

Specifically preferred for use in this invention are liquid elastomers of polybutadiene and copolymers of butadiene and acrylonitrile. Other liquid elastomers which can be used are elastomers of polymers and copolymers of alkylenes having less than five carbon atoms such as vinylidene fluoride and hexafluoropropylene and styrenes such as styrene and vinylstyrene, and butadienes and acrylonitriles.

However, any liquid elastomer within the specified viscosity and compatibility limits can be used in practice of this invention. When the composition of the invention is used as a masterbatch material, the liquid elastomer must, of course, be chosen to be compatible and compoundable with the elastomer of the final compound and compatible with the physical and chemical requirements of the final product.

Liquid elastomers which are particularly useful in practice of this invention are:
Hycar® 1312 LV - A copolymer of 74 weight percent butadiene and 26 weight percent acrylonitrile with a molecular weight of about 1000, and a viscosity of about 60,000 to 70,000 mPa.s (centipoises) at a shear rate of 2 to 3 sec⁻¹ at 25°C. This product is sold by B.F. Goodrich.
Ricon® 150 - 1,2-vinylpolybutadiene with 70 weight percent vinyl and about 8 weight percent cis- and about 22 weight percent trans-butadiene, a molecular weight of about 1800-2400, and a viscosity of about 30,000 to 50,000 mPa.s (centipoises) at a shear rate of 2 to 3 sec⁻¹ at 25°C. This product is sold by Colorado Chemical Specialties, Inc.
Neoprene FB - A polymer of 2-chloro-1,3-butadiene with a viscosity of about 50,000-150,000 mPa.s (centipoises) at 50°C. This product is sold by E. I. du Pont de Nemours and Company.
Viton® LM - A polymer of vinylidene fluoride and hexafluoropropylene with a Brookfield viscosity of about 2000 mPa.s (centipoises) at 100°C. This product is sold by E. I. du Pont de Nemours and Company.
Ricon® 100 - 1,2-vinylstyrene butadiene rubber with a molecular weight of about 2400 and a viscosity of about 400,000 mPa.s (centipoises) at a shear rate of 2 to 3 sec⁻¹ at 25°C.
Ricon® 181 and 184 - styrene butadiene rubbers with a molecular weight of about 3000 for Ricon® 181 and about 6500 for Ricon® 184 and viscosities of about 8000 to 20,000 mPa.s (centipoises) at a shear rate of 2 to 3 sec⁻¹ at 25°C.
Hycar® 1312 - A copolymer of 72 weight percent butadiene and 28 weight percent acrylonitrile with a viscosity of about 120,000 to 140,000 mPa.s (centipoises) at a shear rate of 2 to 3 sec⁻¹ at 25°C.

### General Procedure For Preparing The Particulate Elastomeric Composition of the Invention

A pulp, such as an aramid pulp as sold by E. I. du Pont de Nemours and Company under the trademark Kevlar® and a typical reinforcing filler such as carbon black or silica are placed in a high speed mixer. The pulp/filler ratio can vary from about 1/6 to 4/1, depending on the requirements of the ultimate, reinforced elastomeric product. The mixer (Eirich RV02 Model 22496 at 3225 rpm chopper blade speed and 71 rpm pan speed or Littleford Model #FM-310-D at 3600 rpm chopper speed and 155 rpm plow speed) is run for about two minutes to separate the pulp into individual fibers and blend the fibers with the filler.

The mixer is then opened and liquid elastomer is added. The material is mixed at high speed for about 4 minutes, and the mixer turned off and opened. The resulting particles may be very fine and fibrous or larger and irregularly shaped (usually 0.2-2.5 cm). The particle size is primarily dependent upon the amount of liquid elastomer used. The less elastomer, the smaller the particle. The particular filler and filler amount also have some effect on particle size. For ease of dispersion, smaller sized particles are preferred.

The particles are now ready for use as a masterbatch for compounding in elastomer stock.

### Tests

### Dispersion in Elastomers

To determine the effectiveness of the masterbatch material of this invention, particles of the material are compounded with a standard rubber stock using standard compounding techniques. The particles and rubber stock are mixed using a Banbury mixer, sheeted by a single pass in a roll mill, and cooled to room temperature and then mixed a second time in the Banbury and milled and sheeted again in a roll mill in which the rolls are operated at different circumferential speeds. An uncured sheet is formed. The sheet is press-cured at 6,900-10,350 kPa (1000-1500 psi) and 160°C (320°F) for 20 minutes into a 0.19 cm (0.075 inch) thick slab, about 15 cm²(6 inches square). The standard rubber stock which is often used is a sulfur-curable, low viscosity hydrocarbon rubber identified as Nordel® 1040 and sold by E. I. du Pont de Nemours and Company.

Physical properties are measured at room temperature. In all cases, at least 5 replicates per sample are run. Measurements are by the following methods:
Tear Strength: ASTM D-624-54 (using die C)
Modulus (tensile strength): ASTM D-412-68 (using die C) The tests are conducted at about 24°C (75°F) and but 50% relative humidity with no sample conditioning. The tests are conducted and reported using non-SI units. For the tensile tests, a crosshead speed of 50.8 cm (20 inches) per minute is utilized. The moduli are calculated by determining tensile strengths at particular elongations.

In the following examples, masterbatch materials of the invention were prepared and evaluated, as described, generally, hereinbelow, and using the specific kinds and amounts of component ingredients as indicated in the tables.

To make the particulate elastomeric masterbatch material, an Eirich mixer was charged with reinforcing filler and an aramid pulp having a length of 0.1 to 8 mm, average length about 2 mm. (The pulp was poly(p-phenylene terephthalamide) sold under the trademark Kevlar® by E. I. du Pont de Nemours & Co.). The mixer was closed and the dry solids were blended for about 2 minutes. The mixer was turned off and opened; and liquid elastomer was added. The mixer was, again, closed and the mixture was blended for about 4 minutes.

To evaluate the particulate elastomeric masterbatch material, it was compounded with an elastomer and the compounded elastomer was tested for physical qualities. Elastomer, masterbatch material, and cure system components were added to an OOC Banbury mixer. The mixer was run at 50 to 70 revolutions per minute for about 9 minutes during which time the temperature of the material was permitted to increase from about room temperature to less than about 149°C (300°F) The dry mixture was removed from the mixer and was sheeted in a single pass on a roll mill and allowed to cool to room temperature. The cooled, sheeted, mixture was placed again in the Banbury mixer along with cure system components and the mixer was run at 70 revolutions per minute for 2 minutes during which time the temperature of the materials was permitted to increase from about room temperature to less than about 104°C (220°F). The dry mixture was removed from the mixer and was milled on a roll mill until all ingredients were uniformly blended. The resulting, uniformly blended, sheet was slit, removed from the roll, cut to size, and cured for 20 minutes at 160°C (320°F) under pressure of 6900-10,350 kPa (1000-1500 psi). The cured slab was 15 x 15 x 0.19 cm (6 x 6 x 0.075 inch).

### Example 1

In this example, the reinforcing filler was Hi Sil® 233 and the liquid elastomer was Hycar® 1312 LV. The several masterbatch compositions are indicated in Table 1-1, as parts by weight and by weight percentages.

Hi Si1® 233 is a highly structured silica, particle size about 0.02 µm in diameter. The product has a surface area of 140 m²/g and is sold by Pittsburgh Plate Glass.

**Table 1-1**

| Sample | Liquid Elastomer | | Filler | | Pulp | |
|---|---|---|---|---|---|---|
| | Parts | % | Parts | % | Parts | % |
| 1-1 | 100 | 20.0 | 200 | 40.0 | 200 | 40.0 |
| 1-2 | 25 | 5.9 | 200 | 47.1 | 200 | 47.1 |
| 1-3 | 50 | 11.1 | 200 | 44.4 | 200 | 44.4 |
| 1-4 | 200 | 33.3 | 200 | 33.3 | 200 | 33.3 |
| 1-5 | 400 | 50.0 | 200 | 25.0 | 200 | 25.0 |
| 1-6 | 600 | 60.0 | 200 | 20.0 | 200 | 20.0 |
| 1-7 | 100 | 32.3 | 10 | 3.2 | 200 | 64.5 |
| 1-8 | 100 | 31.2 | 20 | 6.2 | 200 | 62.5 |
| 1-9 | 100 | 28.6 | 50 | 14.3 | 200 | 57.1 |
| 1-10 | 100 | 25.0 | 100 | 25.0 | 200 | 50.0 |
| 1-11 | 100 | 14.3 | 400 | 57.1 | 200 | 28.6 |
| 1-12 | 100 | 11.1 | 600 | 66.7 | 200 | 22.2 |
| 1-13 | 100 | 32.3 | 200 | 64.5 | 10 | 3.2 |
| 1-14 | 100 | 31.2 | 200 | 62.5 | 20 | 6.3 |
| 1-15 | 100 | 28.6 | 200 | 57.1 | 50 | 14.3 |
| 1-16 | 100 | 25.0 | 200 | 50.0 | 100 | 25.0 |
| 1-17 | 100 | 14.3 | 200 | 28.6 | 400 | 57.1 |

The several masterbatch compositions were compounded with elastomer and other components as described previously. For evaluation of this masterbatch composition, the masterbatch material, usually with additional filler, was compounded, in a first step, with a copolymer of butadiene and acrylonitrile sold under the trade designation Hycar® VT-355 by B.F. Goodrich; and in a second step, with the following curing system components:

| | |
|---|---|
| sulfur | 2.0 phr |
| Altax® | 1.5 phr |
| MBT | 1.0 phr |
| zinc oxide | 5.0 phr |
| stearic acid | 0.7 phr. |

The indicated amounts of curing system components were used in parts per hundred parts of combined, liquid and solid, elastomer.

Altax® is a benzothiazyl disulfide cure accelerator sold by R.T. Vanderbilt, Inc.

MBT is 2-mercaptobenzothiazole used as a cure accelerator.

Amounts of materials used in the first compounding step are indicated in Table 1-2. Amounts under columns headed by "MB" are amounts from masterbatch addition and amounts under columns headed by "Added" are amounts from separate addition of those individual ingredients to yield the desired composition. All pulp was added by means of the masterbatch materials.

**Table 1-2**

| Sample | Elastomer (%) | | | | | |
|---|---|---|---|---|---|---|
| | Solid | Liquid | | Filler | | Pulp |
| | | MB | Added | MB | Added | MB |
| Control | 95 | 0 | 5 | 0 | 40 | 10(Added) |
| 1-1 | 95 | 5 | 0 | 10 | 30 | 10 |
| 1-2 | 95 | 1.2 | 3.8 | 10 | 30 | 10 |
| 1-3 | 95 | 2.5 | 2.5 | 10 | 30 | 10 |
| 1-4 | 90 | 10 | 0 | 10 | 30 | 10 |
| 1-5 | 80 | 20 | 0 | 10 | 30 | 10 |
| 1-6 | 70 | 30 | 0 | 10 | 30 | 10 |
| 1-7 | 95 | 5 | 0 | 0.5 | 39.5 | 10 |
| 1-8 | 95 | 5 | 0 | 1 | 39 | 10 |
| 1-9 | 95 | 5 | 0 | 2.5 | 37.5 | 10 |
| 1-10 | 95 | 5 | 0 | 5 | 35 | 10 |
| 1-11 | 95 | 5 | 0 | 20 | 20 | 10 |
| 1-12 | 95 | 5 | 0 | 30 | 10 | 10 |
| 1-13 | 70 | 30 | 0 | 60 | 0 | 3 |
| 1-14 | 70 | 30 | 0 | 60 | 0 | 6 |
| 1-15 | 80 | 20 | 0 | 40 | 0 | 10 |
| 1-16 | 90 | 10 | 0 | 20 | 20 | 10 |
| 1-17 | 97.5 | 2.5 | 0 | 5 | 35 | 10 |

The Control was made by adding the indicated amounts of liquid elastomer, filler, and pulp separately, as individual ingredients in the first compounding step.

The compositions of Table 1-2 were, then, compounded in the second compounding step and were evaluated for physical properties. The results of those evaluations are in Table 1-3.

**Table 1-3**

| Sample | % Elong. | Tensile N/cm² (psi) | Tear Str. N/cm² (psi) | Modulus N/cm² (psi) at 20°C | | | |
|---|---|---|---|---|---|---|---|
| | | | | 10% | 20% | 50% | 100% |
| Control | 120 | 1257 (1823) | 483 (276) | 220 (319) | 557 (808) | 1147 (1664) | 1247 (1808) |
| 1-1 | 121 | 1265 (1834) | 559 (319) | 596 (864) | 945(1371) | 1265 (1834) | |
| 1-2 | 144 | 1302 (1888) | 639 (365) | 399 (579) | 775(1124) | 1218 (1767) | 1307 (1895) |
| 1-3 | 162 | 1247 (1809) | 644 (368) | 214 (310) | 459 (665) | 1065 (1545) | 1238 (1795) |
| 1-4 | 190 | 1207 (1751) | 639 (365) | 454 (659) | 743(1077) | 1144 (1659) | 1197 (1736) |
| 1-5 | 87 | 1292 (1874) | 669 (382) | 761(1105) | 1055(1530) | 1288 (1868) | 1271 (1843) |
| 1-6 | 34 | 1375 (1994) | 539 (308) | 990(1436) | 1200(1741) | 1375 (1994)* | |
| 1-7 | 134 | 1169 (1696) | 643 (367) | 169 (245) | 299 (434) | 1042 (1511) | 1160 (1683) |
| 1-8 | 168 | 1164 (1688) | 546 (312) | 208 (301) | 332 (481) | 711 (1031) | 1042 (1511) |
| 1-9 | 186 | 1057 (1533) | 566 (323) | 250 (362) | 411 (596) | 856 (1241) | 1066 (1546) |
| 1-10 | 118 | 1074 (1557) | 566 (323) | 265 (384) | 436 (632) | 809 (1174) | 1025 (1486) |
| 1-11 | 128 | 1227 (1779) | 581 (332) | 301 (437) | 530 (768) | 947 (1374) | 1165 (1689) |
| 1-12 | 142 | 1294 (1877) | 592 (338) | 199 (288) | 365 (530) | 1098 (1593) | 1300 (1886) |
| 1-13 | 470 | 1036 (1502) | 459 (262) | 213 (309) | 491 (712) | 759 (1101) | 778 (1129) |
| 1-14 | 206 | 978 (1418) | 550 (314) | 187 (271) | 479 (694) | 923 (1339) | 916 (1329) |
| 1-15 | 132 | 1168 (1694) | 620 (354) | 272 (395) | 438 (635) | 777 (1127) | 1014 (1470) |
| 1-16 | 149 | 1289 (1869) | 667 (381) | 383 (556) | 733(1063) | 1113 (1614) | 1156 (1677) |
| 1-17 | 154 | 1034 (1499) | 637 (364) | 199 (289) | 410 (595) | 886 (1285) | 1035 (1501) |

| | | | | | | | |
|---|---|---|---|---|---|---|---|
| *Indicates the modulus at break | | | | | | | |

As an analysis of the test results, Table 1-4 is provided, below, to show moduli for compositions, based on 100 weight parts of solid and liquid elastomer, wherein the masterbatch contains 5 weight parts liquid elastomer, 10 weight parts pulp, and varying amounts of filler.

**Table 1-4**

| Sample | Filler in MB (wt) | | Modulus N/cm² (psi) | | |
|---|---|---|---|---|---|
| | Parts | % | 10% | 20% | 50% |
| Control | 0 | 0 | 220 (319) | 557 (808) | 1147 (1664) |
| 1-7 | 0.5 | 3.2 | 169 (245) | 299 (434) | 1042 (1511) |
| 1-8 | 1 | 6.3 | 208 (301) | 332 (481) | 711 (1031) |
| 1-9 | 2.5 | 14.3 | 250 (362) | 411 (596) | 856 (1241) |
| 1-10 | 5 | 25 | 265 (384) | 436 (632) | 809 (1174) |
| 1-1 | 10 | 40 | 596 (864) | 945 (1371) | 1265 (1834) |
| 1-11 | 20 | 57.1 | 301 (437) | 530 (768) | 947 (1374) |
| 1-12 | 30 | 66.7 | 199 (288) | 365 (530) | 1098 (1593) |

Table 1-4 shows that the effect of the concentration of filler in the masterbatch is more pronounced at low stretch modulus tests; and that there is improvement in using a masterbatch over the Control when the masterbatch has from about 10 to about 65 weight percent filler. This table indicates that the masterbatch can, preferably, have from about 25 to 55 weight percent filler.

Further analysis of the test results are shown in Table 1-5 wherein moduli are tabulated for compositions, based on 100 weight parts of solid and liquid elastomer and the masterbatch contains 10 weight parts filler, 10 weight parts pulp, and varying amounts of liquid elastomer.

**Table 1-5**

| Sample | Liq. elas. in MB (wt) | | Modulus N/cm² (psi) | | |
|---|---|---|---|---|---|
| | Parts | % | 10% | 20% | 50% |
| Control | 0 | 0 | 220 (319) | 557 (808) | 1147 (1664) |
| 1-2 | 1.2 | 5.9 | 399 (579) | 775 (1124) | 1218 (1767) |
| 1-3 | 2.5 | 11.1 | 214 (310) | 459 (665) | 1065 (1545) |
| 1-1 | 5 | 20 | 596 (864) | 945 (1371) | 1265 (1834) |
| 1-4 | 10 | 33.3 | 454 (659) | 743 (1077) | 1282 (1659) |
| 1-5 | 20 | 50 | 762 (1105) | 1055 (1530) | 1288 (1868) |
| 1-6 | 30 | 60 | 990 (1436) | 1200 (1741) | |

Table 1-5 shows that moduli are improved over the entire range tested when ingredients are compounded by means of a liquid elastomer masterbatch rather than by introduction of separate, uncombined, ingredients. The range tested extends to masterbatches having from about 5 to 60 weight percent liquid elastomer.

Finally, analysis of the test results are shown in Table 1-6 wherein moduli are tabulated for compositions formulated to have varying amounts of pulp. Because all of the pulp is added by means of the masterbatch, this analysis could not be made with constant amounts of liquid elastomer and filler.

**Table 1-6**

| Sample | Pulp in MB (wt) | | Modulus N/cm² (psi) | | |
|---|---|---|---|---|---|
| | Parts | % | 10% | 20% | 50% |
| Control | 0 | 0 | 220 (319) | 557 (808) | 1147 (1664) |
| 1-13 | 3 | 3.2 | 213 (309) | 491 (712) | 759 (1101) |
| 1-14 | 6 | 6.3 | 187 (271) | 479 (694) | 923 (1339) |
| 1-15 | 10 | 14.3 | 272 (395) | 438 (635) | 777 (1127) |
| 1-16 | 10 | 25 | 383 (556) | 733 (1063) | 1113 (1614) |
| 1-1 | 10 | 40 | 596 (864) | 945 (1371) | 1265 (1834) |
| 1-10 | 10 | 50 | 265 (384) | 436 (632) | 809 (1174) |
| 1-17 | 10 | 57.1 | 199 (289) | 410 (595) | 886 (1285) |
| 1-8 | 10 | 62.5 | 208 (301) | 332 (481) | 711 (1031) |
| 1-7 | 10 | 64.5 | 169 (245) | 299 (434) | 1042 (1511) |

Table 1-6 shows that the effect of the presence of pulp is more pronounced at low stretch modulus tests; and that there is improvement in using a masterbatch over the control when the masterbatch has from about 5 to about 55 weight percent pulp. This table indicates that the masterbatch can, preferably, have from about 10 to 50 weight percent pulp.

### Example 2

In this example, the reinforcing filler was Hi Sil® 233 and the liquid elastomer was Ricon® 150. The several masterbatch compositions are indicated in Table 2-1, as parts by weight and by weight percentages.

**Table 2-1**

| Sample | Liquid Elastomer | | Filler | | Pulp | |
|---|---|---|---|---|---|---|
| | Parts | % | Parts | % | Parts | % |
| 2-1 | 100 | 20.0 | 200 | 40.0 | 200 | 40.0 |
| 2-2 | 25 | 5.9 | 200 | 47.1 | 200 | 47.1 |
| 2-3 | 50 | 11.1 | 200 | 44.4 | 200 | 44.4 |
| 2-4 | 200 | 33.3 | 200 | 33.3 | 200 | 33.3 |
| 2-5 | 400 | 50.0 | 200 | 25.0 | 200 | 25.0 |
| 2-6 | 600 | 60.0 | 200 | 20.0 | 200 | 20.0 |
| 2-7 | 100 | 32.3 | 10 | 3.2 | 200 | 64.5 |
| 2-8 | 100 | 31.2 | 20 | 6.2 | 200 | 62.5 |
| 2-9 | 100 | 28.6 | 50 | 14.3 | 200 | 57.1 |
| 2-10 | 100 | 25.0 | 100 | 25.0 | 200 | 50.0 |
| 2-11 | 100 | 14.3 | 400 | 57.1 | 200 | 28.6 |
| 2-12 | 100 | 11.1 | 600 | 66.7 | 200 | 22.2 |
| 2-13 | 100 | 32.3 | 200 | 64.5 | 10 | 3.2 |
| 2-14 | 100 | 31.2 | 200 | 62.5 | 20 | 6.3 |
| 2-15 | 100 | 28.6 | 200 | 57.1 | 50 | 14.3 |
| 2-16 | 100 | 25.0 | 200 | 50.0 | 100 | 25.0 |
| 2-17 | 100 | 14.3 | 200 | 28.6 | 400 | 57.1 |

The several masterbatch compositions were compounded with elastomer and other components, as described previously. For evaluation of this masterbatch composition, the masterbatch material, usually with additional filler, was compounded, in a first step, with a hydrocarbon rubber sold by E. I. du Pont de Nemours and Company under the trademark designation Nordel® 1040; and, in a second step, with the following curing system components:

| | |
|---|---|
| Varox® DBPH 50 | 4 phr |
| TAC | 2 phr |
| Maglite® D | 15 phr |

The indicated amounts of curing system components were used in parts per hundred parts of combined, liquid and solid, elastomer.

Varox® DBPH 50 is 2,5-dimethyl-2,5-di(t-butyl-peroxy)hexane used as a vulcanizing, cross-linking agent and sold by R.T. Vanderbilt.

TAC is triallylcyanurate used as a cure accelerator.

Maglite D® is a magnesium oxide vulcanizer, activator, and acid acceptor sold by the C.P. Hall Co., Merck Chemical Division.

Amounts of materials used in the first compounding step are indicated in Table 2-2. Amounts under columns headed by "MB" are amounts from masterbatch addition and amounts under columns headed by "Added" are amounts from separate addition of those individual ingredients to yield the desired composition. All pulp was added by means of the masterbatch materials.

**Table 2-2**

| Sample | Elastomer (%) | | | | | |
|---|---|---|---|---|---|---|
| | Solid | Liquid | | Filler | | Pulp |
| | | MB | Added | MB | Added | MB |
| Control | 95 | 0 | 5 | 0 | 40 | 10(Added) |
| 2-1 | 95 | 5 | 0 | 10 | 30 | 10 |
| 2-2 | 95 | 1.2 | 3.8 | 10 | 30 | 10 |
| 2-3 | 95 | 2.5 | 2.5 | 10 | 30 | 10 |
| 2-4 | 90 | 10 | 0 | 10 | 30 | 10 |
| 2-5 | 80 | 20 | 0 | 10 | 30 | 10 |
| 2-6 | 70 | 30 | 0 | 10 | 30 | 10 |
| 2-7 | 95 | 5 | 0 | 0.5 | 39.5 | 10 |
| 2-8 | 95 | 5 | 0 | 1 | 39 | 10 |
| 2-9 | 95 | 5 | 0 | 2.5 | 37.5 | 10 |
| 2-10 | 95 | 5 | 0 | 5 | 35 | 10 |
| 2-11 | 95 | 5 | 0 | 20 | 20 | 10 |
| 2-12 | 95 | 5 | 0 | 30 | 10 | 10 |
| 2-13 | 70 | 30 | 0 | 60 | 0 | 3 |
| 2-14 | 70 | 30 | 0 | 60 | 0 | 6 |
| 2-15 | 80 | 20 | 0 | 40 | 0 | 10 |
| 2-16 | 90 | 10 | 0 | 20 | 20 | 10 |
| 2-17 | 97.5 | 2.5 | 0 | 5 | 35 | 10 |

The Control was made by adding the indicated amounts of liquid elastomer, filler, and pulp separately, as individual ingredients in the first compounding step.

The compositions of Table 2-2 were, then, compounded in the second compounding step and were evaluated for physical properties. The results of those evaluations are in Table 2-3.

**Table 2-3**

| Sample | % Elong. | Tensile N/cm² (psi) | Tear Str. N/cm² (psi) | Modulus N/cm² (psi) at 20°C | | | |
|---|---|---|---|---|---|---|---|
| | | | | 10% | 20% | 50% | 100% |
| Control | 78 | 844 (1224) | 494 (282) | 361 (524) | 564 (818) | 798(1158) | 808(1172) |
| 2-1 | 23 | 914 (1326) | 503 (287) | 701 (1016) | 835(1211) | 914(1326)* | |
| 2-2 | 13 | 901 (1307) | 489 (279) | 634 (920) | 901(1307)* | - - | |
| 2-3 | 69 | 801 (1162) | 459 (262) | 589 (854) | 739(1072) | 796(1154) | - - |
| 2-4 | 13 | 935 (1356) | 443 (253) | 716 (1039) | 960(1392) | 935(1356)* | |
| 2-5 | 14 | 1216 (1763) | 429 (245) | 982 (1424) | 1216(1763)* | - - | |
| 2-6 | 7 | 1163 (1687) | 391 (223) | 1163 (1687)* | - - | - - | |
| 2-7 | 53 | 863 (1251) | - | 857 (1243) | 872(1264) | 807(1170) | - - |
| 2-8 | 73 | 849 (1231) | - | 694 (1006) | 776(1125) | 799(1159) | - - |
| 2-9 | 136 | 774 (1123) | - | 388 (563) | 683 (990) | 776(1125) | 778(1129) |
| 2-10 | 141 | 773 (1121) | - | 457 (663) | 756(1096) | 764(1108) | 738(1070) |
| 2-11 | 105 | 844 (1224) | - | 483 (701) | 778(1129) | 829(1202) | - - |
| 2-12 | 88 | 853 (1237) | - | 354 (514) | 618 (897) | 836(1212) | 818(1187) |
| 2-13 | 11 | 1367 (1982) | 417 (238) | 1244 (1804) | 1367(1982)* | - - | |
| 2-14 | 4 | 1267 (1837) | 368 (210) | 1267 (1837)* | - - | - - | |
| 2-15 | 8 | 1040 (1509) | 405 (231) | 998 (1448) | 1040(1509)* | - - | |
| 2-16 | 11 | 1063 (1542) | 385 (220) | 1059 (1536) | 1063(1542)* | - - | |
| 2-17 | 194 | 661 (959) | 480 (274) | 474 (687) | 581 (843) | 622 (902) | - - |

| | | | | | | | |
|---|---|---|---|---|---|---|---|
| *Indicates modulus at break | | | | | | | |

As an analysis of the test results, Table 2-4 is provided, below, to show moduli for compositions, based on 100 weight parts of solid and liquid elastomer, wherein the masterbatch contains 5 weight parts liquid elastomer, 10 weight parts pulp, and varying amounts of filler.

**Table 2-4**

| Sample | Filler in MB (wt) | | Modulus N/cm² (psi) | |
|---|---|---|---|---|
| | Parts | % | 10% | 20% |
| Control | 0 | 0 | 361 (524) | 564 (818) |
| 2-7 | 0.5 | 3.2 | 857 (1243) | 872 (1264) |
| 2-8 | 1 | 6.3 | 694 (1006) | 776 (1125) |
| 2-9 | 2.5 | 14.3 | 388 (563) | 683 (990) |
| 2-10 | 5 | 25 | 457 (663) | 756 (1096) |
| 2-1 | 10 | 40 | 700 (1016) | 835 (1211) |
| 2-11 | 20 | 57.1 | 483 (701) | 778 (1129) |
| 2-12 | 30 | 66.7 | 354 (514) | 618 (897) |

Table 2-4 shows that the effect of the concentration of filler in the masterbatch is apparent at high stretch moduli as well as at low stretch moduli; and that there is improvement in using a masterbatch over the control when the masterbatch has from less than 3 weight percent up to at least 65 weight percent filler.

Further analysis of the test results from Example 2 are shown in Table 2-5 wherein moduli are tabulated for compositions, based on 100 weight parts of solid and liquid elastomer and the masterbatch contains 10 weight parts filler, 10 weight parts pulp, and varying amounts of liquid elastomer.

**Table 2-5**

| Sample | Liq. elas. in MB (wt) | | Modulus N/cm² (psi) | |
|---|---|---|---|---|
| | Parts | % | 10% | 20% |
| Control | 0 | 0 | 361 (524) | 564 (818) |
| 2-2 | 1.2 | 5.9 | 634 (920) | 901 (1307)* |
| 2-3 | 2.5 | 11.1 | 589 (854) | 739 (1072) |
| 2-1 | 5 | 20 | 700 (1016) | 835 (1211) |
| 2-4 | 10 | 33.3 | 716 (1039) | 960 (1392) |
| 2-5 | 20 | 50 | 982 (1424) | 1216 (1763)* |
| 2-6 | 30 | 60 | 1163 (1687)* | - - |

| | | | | |
|---|---|---|---|---|
| * Indicates the modulus at break. | | | | |

Table 2-5 shows that moduli are improved over the entire range tested when ingredients are compounded by means of a liquid elastomer masterbatch rather than by introduction of separate, uncombined, ingredients. The range tested extends to masterbatches having from less than 6 weight percent up to at least 60 weight percent liquid eleastomer.

Finally, analysis of the test results are shown in Table 2-6 wherein moduli are tabulated for compositions formulated to have varying amounts of pulp. Because all of the pulp is added by means of the masterbatch, this analysis could not be made with constant amounts of liquid elastomer and filler.

**Table 2-6**

| Sample | Pulp in MB (wt) | | Modulus N/cm² (psi) | |
|---|---|---|---|---|
| | Parts | % | 10% | 20% |
| Control | 0 | 0 | 361 (524) | 564 (818) |
| 2-13 | 3 | 3.2 | 1244 (1804) | 1367 (1982)* |
| 2-14 | 6 | 6.3 | 1267 (1837)* | - - |
| 2-15 | 10 | 14.3 | 998 (1448) | 1040 (1509)* |
| 2-16 | 10 | 25 | 1059 (1536) | 1063 (1542)* |
| 2-1 | 10 | 40 | 700 (1016) | 835 (1211) |
| 2-10 | 10 | 50 | 457 (663) | 756 (1096) |
| 2-17 | 10 | 57.1 | 474 (687) | 581 (843) |
| 2-8 | 10 | 62.5 | 694 (1006) | 776 (1125) |
| 2-7 | 10 | 64.5 | 857 (1243) | 871 (1264) |

| | | | | |
|---|---|---|---|---|
| * Indicates the modulus at break. | | | | |

Table 2-6 shows that moduli are improved over the entire range tested, from less than 3 weight percent to more than 65 weight percent pulp, when ingredients are compounded by means of a liquid elastomer masterbatch rather than by introduction of separate, uncombined, ingredients. The table also shows that there is more pronounced improvement when the masterbatch has from less than about 3 weight percent up to about 50 weight percent pulp.

## Claims

1. A particulate elastomeric composition for use as a masterbatch material comprising 5 to 65 weight parts of aramid pulp, 10 to 65 weight parts of reinforcing filler, and 5 to 75 weight parts of liquid elastomer, the liquid elastomer having a viscosity of 1 to 10⁶ mPa·s at a shear rate of 2-3 sec⁻¹ at 50°C.

2. The composition of Claim 1 wherein the aramid pulp is poly(p-phenylene terephthalamide) pulp.

3. The composition of Claim 2 wherein the pulp has a length of 0.1 to 8 mm.

4. The composition of Claim 1 wherein the reinforcing filler is selected from the group consisting of carbon black and silica.

5. The composition of Claim 1 wherein the liquid elastomer is selected from the group consisting of polymers and copolymers of alkylenes having less than five carbon atoms, styrenes, butadienes, and acrylonitriles.

6. A process for making a particulate elastomeric composition comprising thoroughly mixing 5 to 65 weight parts of aramid pulp with 10 to 65 weight parts of reinforcing filler and then combining the mixed pulp and filler with 5 to 75 weight parts of liquid elastomer, the liquid elastomer having a viscosity of 1 to 10⁶ mPa·s at a shear rate of 2-3 sec⁻¹ at 50°C.

7. The process of Claim 6 wherein the aramid pulp is poly(p-phenylene terephthalamide) pulp.

8. The process of Claim 6 wherein the pulp has a length of 0.1 to 8 mm.

9. The process of Claim 6 wherein the reinforcing filler is selected from the group consisting of carbon black and silica.

10. The process of Claim 6 wherein the liquid elastomer is selected from the group consisting of polymers and copolymers of alkylenes having less than five carbon atoms, styrenes, butadienes, and acrylonitriles.

## Patentansprüche

1. Teilchenförmige elastomere Zusammensetzung für den Einsatz als Masterbatch-Material, umfassend 5 bis 65 Gew.-Teile Aramidpulpe, 10 bis 65 Gew.-Teile Verstärkungsfüllstoff und 5 bis 75 Gew.-Teile flüssiges Elastomeres, wobei das flüssige Elastomere eine Viskosität von 1 bis 10⁶ mPa·s bei einer Schergeschwindigkeit von 2 bis 3 sec⁻¹ bei 50°C aufweist.

2. Zusammensetzung von Anspruch 1, worin die Aramidpulpe Poly(p-phenylenterephthalamid)-Pulpe ist.

3. Zusammensetzung von Anspruch 2, worin die Pulpe eine Länge von 0,1 bis 8 mm aufweist.

4. Zusammensetzung von Anspruch 1, worin der Verstärkungsfüllstoff ausgewählt ist aus der Gruppe bestehend aus Ruß und Siliciumdioxid.

5. Zusammensetzung von Anspruch 1, worin das flüssige Elastomere ausgewählt ist aus der Gruppe bestehend aus Polymeren und Copolymeren von Alkylenen mit weniger als 5 Kohlenstoffatomen, Styrolen, Butadienen und Acrylnitrilen.

6. Verfahren zur Herstellung einer teilchenförmigen elastomeren Zusammensetzung, umfassend das innige Mischen von 5 bis 65 Gew.-Teilen Aramidpulpe mit 10 bis 65 Gew.-Teilen Verstärkungsfüllstoff und anschließendes Kombinieren der Pulpe und Füllstoffmischung mit 5 bis 75 Gew.-Teilen flüssigem Elastomerem, wobei das flüssige Elastomere eine Viskosität von 1 bis 10⁶ mPa·s bei einer Schergeschwindigkeit von 2 bis 3 sec⁻¹ bei 50°C aufweist.

7. Verfahren von Anspruch 6, bei welchem die Aramidpulpe Poly(p-phenylenterephthalamid)-Pulpe ist.

8. Verfahren von Anspruch 6, bei welchem die Pulpe eine Länge von 0,1 bis 8 mm aufweist.

9. Verfahren von Anspruch 6, bei welchem der Verstärkungsfüllstoff ausgewählt ist aus der Gruppe bestehend aus Ruß und Siliciumdioxid.

10. Verfahren von Anspruch 6, bei welchem das flüssige Elastomere ausgewählt ist aus der Gruppe bestehend aus Polymeren und Copolymeren von Alkylenen mit weniger als 5 Kohlenstoffatomen, Styrolen, Butadienen und Acrylnitrilen.

## Revendications

1. Une composition élastomère en particules à utiliser comme matière de mélange-maître, comprenant 5 à 65 parties en poids de pâte fibreuse d'aramide, 10 à 65 parties en poids de charge de renforcement et 5 à 75 parties en poids d'élastomère liquide, l'élastomère liquide ayant une viscosité de 1 à 10⁶ mPa.s à un taux de cisaillement de 2 à 3 s⁻¹ à 50°C.

2. La composition de la revendication 1, dans laquelle la pâte fibreuse d'aramide est une pâte fibreuse de poly(*p*-phénylène-téréphtalamide).

3. La composition de la revendication 2, dans laquelle la pâte fibreuse a une longueur de 0,1 à 8 mm.

4. La composition de la revendication 1, dans laquelle la charge de renforcement est choisie dans le groupe formé par le noir de carbone et la silice.

5. La composition de la revendication 1, dans laquelle l'élastomère liquide est choisi dans le groupe formé par les polymères et copolymères d'alkylènes ayant moins de cinq atomes de carbone, de styrènes, de butadiènes et d'acrylonitriles.

6. Un procédé pour produire une composition élastomère en particules, consistant à mélanger intimement 5 à 65 parties en poids de pâte fibreuse d'aramide avec 10 à 65 parties en poids de charge de renforcement, puis à combiner la pâte fibreuse et la charge mélangées avec 5 à 75 parties en poids d'élastomère liquide, l'élastomère liquide ayant une viscosité de 1 à 10⁶ mPa.s à un taux de cisaillement de 2 à 3 s⁻¹ à 50°C.

7. Le procédé de la revendication 6, dans lequel la pâte fibreuse d'aramide est une pâte fibreuse de poly(*p*-phénylène-téréphtalamide).

8. Le procédé de la revendication 6, dans lequel la pâte fibreuse a une longueur de 0,1 à 8 mm.

9. Le procédé de la revendication 6, dans lequel la charge de renforcement est choisie dans le groupe formé par le noir de carbone et la silice.

10. Le procédé de la revendication 6, dans lequel l'élastomère liquide est choisi dans le groupe formé par les polymères et copolymères d'alkylènes ayant moins de cinq atomes de carbone, de styrènes, de butadiènes et d'acrylonitriles.
